# EUROPÄISCHE PATENTSCHRIFT

(11) **EP 1 606 377 B1**
(45) Veröffentlichungstag und Bekanntmachung des Hinweises auf die Patenterteilung: **10.11.2010**
(21) Anmeldenummer: 04721126.3
(22) Anmeldetag: 17.03.2004
(51) Int. Cl.: C11D 3/30, C11D 1/44, C11D 11/00, C11D 1/72, C11D 1/825, C11D 1/835, C11D 1/645, C09D 9/04

(54) **REINIGUNGSLÖSUNG UND REINIGUNGSVERFAHREN FÜR LACKLEITUNGEN UND/ODER LACKAUFTAGSGERÄTE**
CLEANING SOLUTION AND CLEANING METHOD FOR LACQUER CONDUITS AND/OR LACQUER APPLICATION DEVICES
SOLUTION DE NETTOYAGE ET PROC D POUR NETTOYER DES CONDUITES DE PEINTURE ET/OU DES APPAREILS D'APPLICATION DE PEINTURE

(30) Priorität: 26.03.2003 DE 10313461
(43) Veröffentlichungstag der Anmeldung: 21.12.2005
(73) Patentinhaber: Henkel AG & Co. KGaA, 40589 Düsseldorf (DE)
(72) Erfinder: RÜSSE, Steffen, 40789 Monheim (DE); SENNER, Marcus, 40625 Düsseldorf (DE)
(86) Internationale Anmeldenummer: PCT/EP2004/002719
(87) Internationale Veröffentlichungsnummer: WO 2004/085591

(56) Entgegenhaltungen:
- WO-A-91/09925
- US-A- 4 749 510
- US-A- 5 186 856
- US-A- 5 516 451

## Beschreibung

Die Erfindung betrifft eine Zusammensetzung und ein Verfahren zum Reinigen von Lackleitungen und/oder Lackauftragsgeräten wie beispielsweise Sprühdüsen oder Sprühpistolen in Lackieranlagen. Sie betrifft insbesondere Lackleitungen und/oder Lackauftragsgeräte zur Applikation von Wasserlacken.

Eine Vielzahl von Gegenständen wird nach dem Zusammenbau in einer Lackieranlage lackiert. Beispiele hierfür sind Automobilkarossen und andere Fahrzeuge, Haushaltsgeräte oder Einrichtungsgegenstände. In der Serienfertigung erfolgt das Lackieren in der Regel automatisch. Aus Lackvorratsbehältern wird der Lack über Lackleitungen zu Lackauftragsgeräten transportiert und auf die zu lackierenden Bauteile aufgesprüht. Lackauftragsgeräte können Sprühdüsen, Sprühpistolen oder ähnliches darstellen. In einer Lackieranlage werden sie in der Regel programmgesteuert und/oder sind Teil eines Lackierroboters. Bei den Lacken kann es sich Lösungsmittellacke oder um Wasserlacke handeln. In einer Lackieranlage für die Applikation derartiger Lacke ist in der Regel vorgesehen, Lackpartikel, die nicht auf den zu lackierenden Gegenstand gelangen, aus der Luft oder von den Wänden der Lackierkabine mit Hilfe von Umlaufwasser auszuwaschen. Die Lackpartikel sammeln sich im Umlaufwasser an und müssen aus diesem wieder entfernt werden. Dies gelingt beispielsweise durch Entkleben und Koagulieren oder durch Dispergieren und Abtrennen mittels Membranverfahren.

Lackleitungen und/oder Lackauftragsgeräte müssen allein aus dem Grund regelmäßig gereinigt werden, weil sie durch abgelagerte Lackpartikel mit der Zeit verstopfen können. Werden unterschiedlich gefärbte Lacke aufgebracht, ist es zusätzlich erforderlich, die Lackauftragsgeräte beim Farbwechsel zu reinigen. Dagegen ist für jede einzelne Farbe in der Regel eine eigene Lackleitung vorgesehen, so dass beim Farbwechsel auf eine andere Lackleitung umgeschaltet wird. Daher muss eine Lackleitung wesentlich seltener gereinigt werden als ein Lackauftragsgerät.

Für diese Reinigungsaufgaben werden häufig Reinigungsflüssigkeiten verwendet, die aus organischen Lösungsmitteln bestehen oder die zumindest einen hohen Anteil an organischen Lösungsmitteln enthalten. Beispielsweise beschreibt die WO 97/42297 eine Reinigungszusammensetzung für ein Lackiersystem, das 3 bis 90 % eines organischen Lösungsmittels enthält. Dieses kann beispielsweise aus aromatischen oder aliphatischen Kohlenwasserstoffen oder aus aliphatischen Estern bestehen. Als zusätzliche Lösungsmittel sind 0,5 bis 30 % Alkohole, Glykole oder Glykolether vorgesehen. US 5 972 865 zitiert, dass im Stand der Technik als Lösungsmittel in derartigen Reinigungsflüssigkeiten bekannt sind: Alkohole, Terpene, chlorierte Lösungsmittel, fluorierte Kohlenwasserstoffe, aliphatische Kohlenwasserstoffe, aromatische Kohlenwasserstoffe. Gegenstand dieses Dokuments sind dann Reinigungslösungen, die u. a. 10 bis 40 % eines "aktiven Lösungsmittels" sowie 10 bis 50 % eines "Co-Lösungsmittels" enthalten. Beispiele für erstere sind sogenannte "dibasische Ester" und Propylenglykolmethyletheracetat, für letztere Methylether von Propylenglykol, Dipropylenglykol oder Tripropylenglykol oder höhere Homologe oder Vinylether und Homologe. Weitere in der Praxis häufig eingesetzte Lösungsmittel sind Butanol und Butylglykol.

Ein allgemeiner Nachteil dieser organischen Lösungsmittel liegt in ihrem merklichen Dampfdruck. Sie gehen also teilweise in die Umgebungsluft über und werden dort durch den Summenparameter "flüchtiger organischer Kohlenstoff" (englisch: "volatile organic carbon, VOC") erfaßt. Hiermit sind gesundheitliche Risiken, Umweltrisiken und bei nicht ausreichender Lüftung auch eine Explosionsgefahr verbunden.

Daher gibt es bereits Versuche, Reinigungslösungen für den genannten Verwendungszweck zu finden, die zu einer deutlich verringerten VOC-Belastung führen. Dies gelingt durch weitgehenden oder völligen Verzicht auf die genannten organischen Lösungsmittel. Beispielsweise offenbart US 5 632 822 ein Reinigungskonzentrat für Lackiereinrichtungen, das wasserbasiert ist und keine flüchtigen organischen Verbindungen enthält. Es stellt eine wäßrige Lösung eines Waschmittelbuilders und eines Netzmittels dar. Der Waschmittelbuilder kann beispielsweise Monoethanolamin sein, das in einem Anteil von 3 bis 8 % in dem Konzentrat vorliegen kann. In einem Rezepturbeispiel werden weiterhin 1 bis 5 Gew.-% Triethanolamin angeführt. Das Netzmittel kann beispielsweise ein modifiziertes ethoxyliertes Tensid darstellen, das zu 1 bis 5 Gew.-% in dem Konzentrat vorliegt. Beispielsweise handelt es sich hierbei um einen ethoxylierten Alkohol, ohne dass nähere Angaben gemacht werden. Ein entsprechendes Rezepturbeispiel enthält weiterhin Dodecylbenzolsulfonsäure sowie Nonylphenolethoxylat. Zur Anwendung wird dieses Konzentrat mit Wasser auf eine Konzentration von 5 bis 50 % verdünnt. Die Anwendungstemperatur liegt im Bereich von 100 bis 160 °F (ca. 40 bis 70 °C). Die Reinigungslösung wird zur Wiederverwendung zurückgeführt. Lackpartikel werden einerseits durch ein Filter, andererseits durch Absetzen von der Reinigungsflüssigkeit abgetrennt.

Gemäß dieser Lehre ist es also erforderlich, in einer eigenen Anlage Lackpartikel von der Reinigungsflüssigkeit abzutrennen und letztlich zu entsorgen. Einfacher wäre es, die mit Lackpartikeln beladene Reinigungsflüssigkeit dem Kreislaufwasser der Lackieranlage zuzugeben und die Lackpartikel auf diese Weise zusammen mit dem in wesentlich größerer Menge anfallenden "overspray" abzutrennen und zu entsorgen. Eine getrennte Abfallbehandlung wird dann überflüssig. Allerdings ist es in diesem Fall erforderlich, dass die Reinigungsflüssigkeit mit dem Umlaufwasser verträglich ist. Dies heißt: Es darf dort weder zu Verklebungen noch zu übermäßiger Schaumbildung führen. Weiterhin darf der Vorgang der Entklebung / Koagulierung oder der Dispergierung der Lackpartikel im Kreislaufwasser nicht gestört werden. Da das Kreislaufwasser letzten Endes zumindest anteilig über eine Kläranlage aufbereitet und entsorgt werden muss, müssen die Inhaltsstoffe der Reinigungsflüssigkeit zumindest weitgehend biologisch abbaubar sein.

Die Erfindung stellt sich daher die Aufgabe, eine Reinigungsflüssigkeit und ein Reinigungsverfahren für Lackleitungen und/oder Lackauftragsgeräte zur Verfügung zu stellen, die zum einen weitgehend frei ist von Komponenten, die zu einer VOC-Belastung der Luft führen, und die andererseits nach dem Gebrauch in das Kreislaufwasser der Lackieranlage gegeben werden kann. Selbstverständlich muss die Reinigungsflüssigkeit auch die Wirksamkeitsanforderungen erfüllen, d. h. die Lackleitungen und/oder die Lackauftragsgeräte zuverlässig in wirtschaftlich sinnvollen Zeiträumen zu reinigen und dadurch funktionsfähig zu halten.

Die vorliegende Erfindung betrifft in einem ersten Aspekt eine (anwendungsfertige) Reinigungslösung, enthaltend Wasser und:
a) wassermischbare Alkyl- und/oder Hydroxyalkylamine mit einer bis drei Alkyl- oder Hydroxyalkygruppen im Molekül in einer solchen Menge, dass der pH-Wert der Reinigungslösung im Bereich von 9 bis 13, vorzugsweise im Bereich von 10 bis 13 liegt,
b) 0,01 bis 2 Gew.-% Alkylalkohol- oder Alkylaminethoxylate mit 8 bis 22 C-Atomen im Alkylrest und mit im Mittel 8 bis 15 Ethylenoxideinheiten im Molekül, deren endständige -OH-Gruppe frei oder mit einem Alkohol mit 1 bis 4 C-Atomen verethert sein kann,
c) 0,01 bis 2 Gew.-% Alkylalkohol- oder Alkylaminethoxylate mit 8 bis 22 C-Atomen im Alkylrest und mit im Mittel 0,5 bis 5 Ethylenoxideinheiten im Molekül, deren endständige -OH-Gruppe frei oder mit einem Alkohol mit 1 bis 4 C-Atomen verethert sein kann,

Als Alkyl- und/oder Hydroxyalkylamine können alle derartigen Verbindungen eingesetzt werden, die wassermischbar sind und in wässriger Lösung einen pH-Wert im Bereich von 9 bis 13, vorzugsweise von 10 bis 13 ergeben. Dabei wählt man für die Reinigung von Lackauftragsgeräten vorzugsweise einen pH-Wert im Bereich von 10,5 bis 11,5 und für die Reinigung von Lackleitungen (die gealterte Lackreste enthalten können und daher schwieriger zu reinigen sind als die häufiger gereinigten Lackauftragsgeräte) vorzugsweise von 11 bis 12,5.

Beispielsweise können diese Amine Mono-, Di- oder Trialkylamine mit 1 bis 4 C-Atomen in der Alkylgruppe darstellen. Gemeinsam mit diesen oder an ihrer Stelle können Mono-, Di- oder Trihydroxyalkylamine eingesetzt werden, die ebenfalls pro Alkylrest 1 bis 4 C-Atome aufweisen können. Setzt man Hydroxyalkylamine ein, deren Hydroxylgruppen zusätzlich ethoxyliert sind und die dadurch eine verbesserte Wassermischbarkeit haben, sind auch längere Alkylketten möglich. Selbstverständlich können als Alkyl- und/oder Hydroxyalkylamine auch Di-, Tri- oder Polyamine eingesetzt werden. Einfache Beispiele hierfür sind Ethylendiamin und Diethylentriamin oder Homologe hiervon mit längeren Alkylenketten wie beispielsweise Propylen- oder Butylendiamine. Bei der Auswahl der Amine sind primäre und/oder tertiäre Amine bevorzugt, da die sekundären Amine gesundheitsschädliche Nitrosamine bilden können. Spezielle Beispiele bevorzugter Amine sind Mono- und Trialkanolamine, insbesondere Mono- und Triethanolamin.

Durch den pH-Wert im genannten Bereich ist es möglich, auch ohne organische Lösungsmittel eine schnelle Reinigung zu erzielen. Bei Wasserlacken führt ein pH-Wert in dem genannten Bereich jedoch dazu, dass die Lacke koagulieren und die Düsen verstopfen. Vermutlich im Hinblick hierauf wird in dem genannten Dokument US 5 632 822 empfohlen, einen zu hohen pH-Wert in der zirkulierenden Reinigungsflüssigkeit durch Säurezugabe abzusenken. Als Richtwert wird ein pH-Wert von 7,5, also deutlich unterhalb desjenigen gemäß vorliegender Erfindung, angegeben. Für das Lösemittel-haltige Reinigungskonzentrat der US 5 972 865, das ebenfalls Amine enthalten kann, wird ein pH-Wert im Bereich von 8 bis 9,5, also ebenfalls deutlich unterhalb des bevorzugten Bereichs der vorliegenden Erfindung angegeben.

Das Koagulieren der Wasserlacke im erfindungsgemäßen pH-Bereich wird durch die erfindungsgemäße Tensidkombination verhindert. Das unter b) genannte Tensid hat sehr gute Lack-dispergierende Eigenschaften und verhindert so die Koagulierung bei den genannten pH-Werten. Das unter c) genannte Tensid hat vornehmlich die Aufgabe, abgeschiedene Lackrückstände zu unterwandern oder zu benetzen und dadurch von der Unterlage abzulösen. Tenside dieser Gruppe sind häufig schlecht wasserlöslich. Tenside der Gruppe b) haben jedoch den Zusatzeffekt, die Löslichkeit der Tenside der Gruppe c) zu verbessern und diese Tenside in Lösung zu bringen.

Bei den Tensiden der Gruppen b) und c) handelt es sich vorzugsweise um solche, deren Alkylreste auf tierische oder pflanzliche Fette oder Öle zurückgehen. Sie können dadurch gewonnen werden, dass man derartige Fette und Öle, die Fettsäureester von Glycerin darstellen, reduzierend spaltet und hierdurch Fettalkohole erhält, die sich von den Fettsäuren ableiten. Diese werden entweder direkt oder nach Umwandlung in die entsprechenden Fettamine ethoxyliert. Da Fette und Öle tierischen oder pflanzlichen Ursprungs in der Regel verschiedene Fettsäuren mit unterschiedlichen Kettenlängen enthalten, bestehen die hieraus abgeleiteten Alkylalkohol- oder Alkylaminethoxylate in der Regel ebenfalls aus einem Gemisch von Molekülen mit unterschiedlichen Kettenlängen im Alkylrest. Derartige Gemische sind im Rahmen der vorliegenden Erfindung einsetzbar, so lange sie hauptsächlich, d. h. zu mehr als 50 %, Alkylreste im angegebenen Kettenlängenbereich enthalten.

Durch die Formulierung, dass die Tenside "im Mittel" eine bestimmte Anzahl von Ethylenoxideinheiten enthalten sollen, wird der bekannten Tatsache Rechnung getragen, dass bei der Ethoxylierung von Alkoholen oder Aminen gemischte Produkte entstehen, die unterschiedliche Moleküle mit verschiedenen Ethoxylierungsgraden enthalten. Im statistischen Mittel sollen die Produkte jedoch jeweils die vorstehend angegebene Anzahl von Ethylenoxideinheiten im Molekül aufweisen. Tenside, die diesen Bedingungen genügen, sind im Handel erhältlich. Die Tenside der Gruppen b) und c) werden vorzugsweise jeweils in einer Konzentration im Bereich von 0,05 bis 0,2 Gew.-% eingesetzt. Dies ist für die Wirksamkeit in der Regel völlig ausreichend. Höhere Konzentrationen sind möglich, verteuern jedoch das Produkt.

Die Tenside der Gruppe b) wählt man vorzugsweise aus Alkylaminethoxylaten aus. Ein geeignetes Beispiel ist Kokosamin x 12 Mol Ethylenoxid. Dagegen wählt man die Tenside der Gruppe c) vorzugsweise aus Alkylalkoholethoxylaten aus. Ein geeignetes Beispiel ist C₁₀₋₁₄-Fettalkohol x 3 Mol Ethylenoxid.

Tenside der Gruppen b) und c), deren endständige -OH-Gruppe mit einem Alkohol mit 1 bis 4 C-Atomen verethert ist, haben eine im Vergleich zu unveretherten Molekülen geringere Schaumneigung und können sogar schaumdämpfend wirken. Durch einen geeigneten Anteil an veretherten Verbindungen im Produkt lassen sich also die Schaumeigenschaften einstellen.

Zur verbesserten Prozeßsicherheit kann die Reinigungslösung zusätzlich eine oder mehrere der folgenden Komponenten enthalten: Biozide zum Erhöhen der biologischen Stabilität, Korrosionsinhibitoren, organische Polymere, insbesondere Blockpolymere, die das Wiederanschmutzen und die Belagsbildung verzögern.

Die VOC-Belastung wird dadurch verringert, dass die erfindungsgemäße Reinigungslösung keine nennenswerten Mengen an organischen Lösungsmitteln enthält. Demnach ist es bevorzugt, dass die Reinigungslösung nicht mehr als insgesamt 1 Gew.-% organische Lösungsmittel enthält, die ausgewählt sind aus a) offenkettigen oder zyklischen, gesättigten, ungesättigten oder aromatischen Kohlenwasserstoffen oder halogenierten Derivaten hiervon, b) aus anderen ein- oder mehrwertigen Alkoholen als im Anspruch 1 definiert oder deren Ether oder Ester oder c) aus Ketonen.

Die Reinigungslösung soll also keines oder allenfalls geringe Mengen derjenigen Lösungsmittel enthalten, die gemäß der eingangs zitierten Literatur für Lösemittel-haltige Reinigungsflüssigkeiten für Lackiereinrichtungen bekannt sind. Insbesondere kommt die erfindungsgemäße Reinigungslösung ohne die sonst häufig verwendeten Lösungsmittel Butanol und Butylglykol aus.

Weiterhin soll die erfindungsgemäße Reinigungslösung nicht mehr als 0,04 Gew.-%, vorzugsweise nicht mehr als 0,02 Gew.-% und insbesondere nicht mehr als 0,01 Gew.-% anionische Tenside wie beispielsweise Alkylbenzolsulfonate enthalten. Hierdurch wird verhindert, dass es bei der Zugabe der gebrauchten Reinigungslösung zum Umlaufwasser zu einer unerwünschten Schaumbildung kommt.

Weiterhin ist es bevorzugt, dass die erfindungsgemäße Reinigungslösung nicht mehr als 0,04 Gew.-%, vorzugsweise nicht mehr als 0,02 Gew.-% und insbesondere nicht mehr als 0,01 Gew.-% Alkylphenolethoxylate enthält. Da diese tensidisch wirkende Stoffgruppe entweder schlecht biologisch abbaubar ist oder zu Abbauprodukten führen kann, die den Hormonhaushalt von Wasserorganismen stören, wird die biologische Verträglichkeit der Reinigungslösung verbessert, wenn man auf diese Substanzgruppe möglichst weitgehend verzichtet. Da die Reinigungsflüssigkeit letzten Endes nach Behandeln in einer Kläranlage in die Umwelt gelangt, ist diese Eigenschaft von Bedeutung.

Weiterhin ist es bevorzugt, dass die erfindungsgemäße Reinigungslösung nicht mehr als 0,04 Gew.-%, vorzugsweise nicht mehr als 0,02 Gew.-% und insbesondere nicht mehr als 0,01 Gew.-% an Verbindungen wie beispielsweise Buildersubstanzen (Silicate, Phosphate, Borate etc.) enthält, die bei 20 °C und Normaldruck fest sind. Dies hat Vorteile hinsichtlich Umweltverträglichkeit, da die Reinigungslösung keine Borate und keine Phosphate enthalten soll, die als potentiell schädlich für aquatische Lebensräume angesehen werden. Außerdem wird durch die weitgehende Abwesenheit derartiger Verbindungen eine Verkrustung (Bildung fester Ablagerungen) von Leitungen und Applikationsgeräten durch feste Rückstände verhindert. Dies verringert den Aufwand für eine Nachspülung oder macht eine Nachspülung überflüssig.

Die erfindungsgemäße Reinigungslösung kann in der vorstehend beschrieben anwendungsfertigen Form hergestellt und versandt werden. Hiermit ist allerdings verbunden, dass große Mengen Wasser transportiert werden müssen. Die Reinigungsflüssigkeit kann auch durch Zugabe der erfindungsgemäßen Komponenten in den angegebenen Konzentrationen zu Wasser unmittelbar am Ort der Anwendung hergestellt werden. Dies ist jedoch in der Praxis nachteilig, da am Ort der Anwendung in der Regel keine entsprechenden Dosier- und Mischeinrichtungen sowie entsprechend geschultes Personal zur Verfügung stehen. Daher ist es wie üblich bevorzugt, ein wässriges Konzentrat der Reinigungslösung herzustellen, das die Wirkstoffe in höheren Konzentrationen als die Anwendungslösung enthält und aus dem durch einfaches Verdünnen mit Wasser am Anwendungsort die anwendungsfertige Reinigungslösung hergestellt werden kann. Daher umfasst die vorliegende Erfindung auch ein wässriges Konzentrat für eine Reinigungslösung, das beim Verdünnen mit Wasser um einen Faktor im Bereich von etwa 10 bis etwa 200, vorzugsweise im Bereich von etwa 50 bis etwa 150 die anwendungsfertige Reinigungslösung ergibt. Dies heißt, das Konzentrat kann sehr ergiebig eingestellt sein und ist auch bei hoher Verdünnung wirksam. Die bevorzugten unterschiedlichen pH-Werte für das Spülen von Lackleitungen oder Lackauftragsgeräten stellt man am einfachsten dadurch ein, dass man das Konzentrat für das Spülen von Lackleitungen weniger stark verdünnt als für das Spülen von Lackauftragsgeräten.

In einem zweiten Aspekt betrifft die vorliegende Erfindung ein Verfahren zum Reinigen von Lackleitungen und/oder Lackauftragsgeräten in einer Lackieranlage, wobei man die Lackleitungen und/oder die Lackauftragsgeräte mit einer vorstehend beschriebenen Reinigungslösung spült. Dabei hat die Reinigungslösung vorzugsweise eine Temperatur im Bereich von 10 bis 35 °C, insbesondere im Bereich von 15 bis 30 °C. Dies heißt, die Reinigungslösung kann im Regelfall bei Umgebungstemperatur eingesetzt werden. Es ist nicht erforderlich, sie auf höhere Temperaturen zu erwärmen. Gegenüber bekannten Reinigungslösungen des Standes der Technik verringert dies den Energiebedarf, wodurch ein weiterer ökonomischer und ökologischer Nutzen gegenüber dem Stand der Technik entsteht.

Vorzugsweise werden die Lackleitungen und/oder die Lackauftragsgeräte für eine Zeitdauer im Bereich von 1 Sekunde bis 24 Stunden mit der Reinigungslösung gespült. Für Lackauftragsgeräte, die bei jedem Farbwechsel und daher relativ häufig gespült werden müssen, genügt in der Regel eine Spülung für eine Zeitdauer im Bereich von 1 Sekunde bis 5 Sekunden. Im Bedarfsfall kann natürlich auch länger gespült werden. Lackleitungen, die in der Regel jeweils nur für eine einzige Farbe verwendet werden und daher von einem Farbwechsel nicht betroffen sind, müssen erst dann gespült werden, wenn sie durch Lackablagerungen zu verstopfen drohen. Sie sind daher schwieriger zu reinigen als die Lackauftragsgeräte. Sie werden vorzugsweise für eine Zeitdauer im Bereich von 10 Minuten bis 24 Stunden mit der Reinigungslösung gespült. Zusätzlich kann die Reinigungslösung zum Spülen der Lackleitungen stärker alkalisch eingestellt werden als zum Spülen der Lackauftragsgeräte. Bevorzugtere Zeitintervalle hängen von dem verwendeten Lacktyp ab und können empirisch ermittelt werden.

Die Reinigungslösung kann nach einem einmaligen Spülschritt entsorgt oder für mehrere Spülschritte wieder verwendet werden. Für die kurze Reinigungsdauer der Lackauftragsgeräte wird in der Regel jeweils frische Reinigungslösung eingesetzt. Für das Spülen der Lackleitungen wird die Reinigungslösung vorzugsweise im Kreis geführt und daher mehrmals verwendet. Wenn sie zu sehr mit Lackpartikeln beladen ist, muss sie letztlich entsorgt und durch frische Lösung ersetzt werden. Dies kann innerhalb desselben Reinigungszyklus der Fall sein.

Wie bereits vorstehend beschrieben, geschieht die Entsorgung der gebrauchten Reinigungslösung am einfachsten dadurch, dass man sie nach dem Spülen der Lackleitungen und/oder der Lackauftragsgeräte dem Umlaufwasser der Lackieranlage zugibt. In diesem Umlaufwasser werden die Lackpartikel aus der Reinigungslösung so weiter behandelt und letztlich entsorgt, wie es auch mit dem Lackoverspray der Fall ist. Ein getrennter Aufbereitungs- und Entsorgungsschritt ist damit nicht erforderlich.

### Ausführungsbeispiele

Es wurden das folgende erfindungsgemäße Konzentrat für eine Reinigungslösung sowie Vergleichskonzentrate hergestellt (Zusammensetzung in Gewichts-%):

| **Komponente** | **Beispiel** | **Vergleich. 1** | **Vergleich 2** |
|---|---|---|---|
| Monoethanolamin | 27,9 | 27,9 | 27,9 |
| Kokosamin x 12 Ethylenoxid | 12,0 | - | 12,0 |
| C₁₀₋₁₄-Fettalkohol x 3 Ethylenoxid | 9,5 | 9,5 | - |
| vollentsalztes Wasser | ad 100 | ad 100 | ad 100 |

Als anwendungsfertige Reinigungslösungen wurden 1 Gew.-%ige wässrige Lösungen der vorstehenden Konzentrate hergestellt. Der pH-Wert dieser Lösungen betrug 11 +/- 0,2.

### A) Abtestung der Lackverträglichkeit

Je 50 ml der Anwendungslösungen aus dem Beispiel und den Vergleichskonzentraten 1 und 2 wurden mit 10 ml Diamant-weißem Wasserlack der Fa. BASF angesetzt. Hierbei zeigt sich bei der Lösung aus dem Vergleichskonzentrat 1 eine deutliche Aufrahmung. Das Spülmedium ist somit nicht lackverträglich und kann im Prozess nicht eingesetzt werden. In der Praxis würden dann Düsenverstopfungen und / oder Lackkoagulat auf den lackierten Karossen die Folge sein. Die Lösungen aus dem Beispiel und dem Vergleichskonzentrat 2 führten nicht zur Aufrahmung.

### B) Abtestung der Reinigungswirkung

Lackapplikationsgeräte bestehen meist aus Aluminium oder Titan, zuweilen auch aus Edelstahl. Drei Titanbleche wurden mit o.g. Wasserlack lackiert. Der Lack wurde bei Raumtemperatur über 3 Tage physikalisch getrocknet. Mit einer Spritzpistole wurden aus 30 cm Entfernung die Anwendungslösungen aus dem Beispiel und den Vergleichskonzentraten 1 und 2 je 5 Minuten auf die lackierten Testbleche aufgesprüht. Bei der Lösung aus Vergleichskonzentrat 2 löst sich der Lack deutlich langsamer ab. Der Angriff findet bevorzugt an der Grenzfläche zwischen lackiertem und nicht lackiertem Teil des Bleches statt. Bei den Lösungen aus dem Beispiel und dem Vergleichskonzentrat 1 wird der Lack auch an vielen Stellen direkt unterwandert. Die Phasengrenze ist nicht mehr der "Hauptangriffspunkt".

### Fazit:

Beide Ergebnisse sind praxisrelevant. Nur die Anwendungslösung aus dem Beispielskonzentrat besteht beide Abtestungen erfolgreich und ist daher praxistauglich.

## Patentansprüche

1. Reinigungslösung, enthaltend Wasser und
a) wassermischbare Alkyl- und/oder Hydroxyalkylamine mit einer bis drei Alkyl- oder Hydroxyalkygruppen im Molekül in einer solchen Menge, dass der pH-Wert der Reinigungslösung im Bereich von 9 bis 13 liegt,
b) 0,01 bis 2 Gew.-% Alkylalkohol- oder Alkylaminethoxylate mit 8 bis 22 C-Atomen im Alkylrest und mit im Mittel 8 bis 15 Ethylenoxideinheiten im Molekül, deren endständige -OH-Gruppe frei oder mit einem Alkohol mit 1 bis 4 C-Atomen verethert sein kann,
c) 0,01 bis 2 Gew.-% Alkylalkohol- oder Alkylaminethoxylate mit 8 bis 22 C-Atomen im Alkylrest und mit im Mittel 0,5 bis 5 Ethylenoxideinheiten im Molekül, deren endständige -OH-Gruppe frei oder mit einem Alkohol mit 1 bis 4 C-Atomen verethert sein kann.

2. Reinigungslösung, enthaltend Wasser und
a) wassermischbare Alkyl- und/oder Hydroxyalkylamine mit einer bis drei Alkyl- oder Hydroxyalkygruppen im Molekül in einer solchen Menge, dass der pH-Wert der Reinigungslösung im Bereich von 10 bis 13 liegt,
b) 0,01 bis 2 Gew.-% Alkylalkohol- oder Alkylaminethoxylate mit 8 bis 22 C-Atomen im Alkylrest und mit im Mittel 8 bis 15 Ethylenoxideinheiten im Molekül, deren endständige -OH-Gruppe frei oder mit einem Alkohol mit 1 bis 4 C-Atomen verethert sein kann,
c) 0,01 bis 2 Gew.-% Alkylalkohol- oder Alkylaminethoxylate mit 8 bis 22 C-Atomen im Alkylrest und mit im Mittel 0,5 bis 5 Ethylenoxideinheiten im Molekül, deren endständige -OH-Gruppe frei oder mit einem Alkohol mit 1 bis 4 C-Atomen verethert sein kann.

3. Reinigungslösung nach einem oder beiden der Ansprüche 1 und 2, **dadurch gekennzeichnet, dass** sie als zusätzliche Komponenten Biozide, Korrosionsinhibitoren und/oder organische Polymere enthält.

4. Reinigungslösung nach einem oder mehreren der Ansprüche 1 bis 3 , **dadurch gekennzeichnet, dass** sie nicht mehr als 0,04 Gew.-% anionische Tenside enthält.

5. Reinigungslösung nach einem oder mehreren der Ansprüche 1 bis 4, **dadurch gekennzeichnet, dass** sie nicht mehr als 0,04 Gew.-% Alkylphenolethoxylate enthält.

6. Reinigungslösung nach einem oder mehreren der Ansprüche 1 bis 5, **dadurch gekennzeichnet, dass** sie nicht mehr als 0,04 Gew.-% einer oder mehrerer Verbindungen enthält, die bei 20 °C und Normaldruck Festkörper darstellen.

7. Wässriges Konzentrat für eine Reinigungslösung, das beim Verdünnen mit Wasser um einen Faktor im Bereich von 10 bis 200 eine Reinigungslösung nach einem oder mehreren der Ansprüche 1 bis 6 ergibt.

8. Verfahren zum Reinigen von Lackleitungen und/oder Lackauftragsgeräten in einer Lackieranlage, wobei man die Lackleitungen und/oder die Lackäuftragsgeräte mit einer Reinigungslösung nach einem oder mehreren der Ansprüche 1 bis 6 spült.

9. Verfahren nach Anspruch 8, **dadurch gekennzeichnet, dass** die Reinigungslösung eine Temperatur im Bereich von 10 bis 35 °C, vorzugsweise von 15 bis 30 °C aufweist.

10. Verfahren nach einem oder beiden der Ansprüche 8 und 9, **dadurch gekennzeichnet, dass** die Lackleitungen und/oder die Lackauftragsgeräte für eine Zeitdauer im Bereich von 1 Sekunde bis 24 Stunden, dabei Lackauftragsgeräte vorzugsweise für eine Zeitdauer im Bereich von 1 Sekunde bis 5 Sekunden, Lackleitungen vorzugsweise für eine Zeitdauer im Bereich von 10 Minuten bis 24 Stunden mit der Reinigungslösung gespült werden.

11. Verfahren nach einem oder mehreren der Ansprüche 8 bis 10, **dadurch gekennzeichnet, dass** die Reinigungslösung nach dem Spülen der Lackleitungen und/oder der Lackauftragsgeräte dem Umlaufwasser der Lackieranlage zugegeben wird.

## Claims

1. A cleaning solution, containing water and
a) water-miscible alkyl- and/or hydroxyalkyl-amines with one to three alkyl or hydroxylalkyl groups in the molecule, in such an amount that the pH value of the cleaning solution is in the range from 9 to 13,
b) 0.01 to 2% by weight of alkyl alcohol ethoxylates or alkylamine ethoxylates with 8 to 22 C atoms in the alkyl radical and with on average 8 to 15 ethylene oxide units in the molecule, the terminal OH group of which may be free or etherified with an alcohol having 1 to 4 C atoms,
c) 0.01 to 2% by weight of alkyl alcohol ethoxylates or alkylamine ethoxylates with 8 to 22 C atoms in the alkyl radical and with on average 0.5 to 5 ethylene oxide units in the molecule, the terminal OH group of which may be free or etherified with an alcohol having 1 to 4 C atoms.

2. A cleaning solution, containing water and
a) water-miscible alkyl- and/or hydroxyalkyl-amines with one to three alkyl or hydroxylalkyl groups in the molecule, in such an amount that the pH value of the cleaning solution is in the range from 10 to 13,
b) 0.01 to 2% by weight of alkyl alcohol ethoxylates or alkylamine ethoxylates with 8 to 22 C atoms in the alkyl radical and with on average 8 to 15 ethylene oxide units in the molecule, the terminal OH group of which may be free or etherified with an alcohol having 1 to 4 C atoms,
c) 0.01 to 2% by weight of alkyl alcohol ethoxylates or alkylamine ethoxylates with 8 to 22 C atoms in the alkyl radical and with on average 0.5 to 5 ethylene oxide units in the molecule, the terminal OH group of which may be free or etherified with an alcohol having 1 to 4 C atoms.

3. The cleaning solution according to either one or both of claims 1 and 2, **characterized in that** it contains as additional components, biocides, corrosion inhibitors and/or organic polymers.

4. The cleaning solution according to any or several of claims 1 to 3, **characterized in that** it contains not more than 0.04% by weight of anionic surfactants.

5. The cleaning solution according to one or several of claims 1 to 4, **characterized in that** it contains not more than 0.04% by weight of alkylphenol ethoxylates.

6. The cleaning solution according to any or several of claims 1 to 5, **characterized in that** it contains not more than 0.04% by weight of one or more compounds which represent solids at 20°C and under normal pressure.

7. An aqueous concentrate for a cleaning solution, which upon dilution with water by a factor in the range from 10 to 200 results in a cleaning solution according to any or several of claims 1 to 6.

8. A method for cleaning lacquer conduits and/or lacquer application devices in a lacquering installation, wherein the lacquer conduits and/or the lacquer application devices are rinsed with a cleaning solution according to any or several of claims 1 to 6.

9. The method according to claim 8, **characterized in that** the cleaning solution has a temperature in the range from 10 to 35°C, preferably from 15 to 30°C.

10. The method according to either one or both of claims 8 and 9, **characterized in that** the lacquer conduits and/or the lacquer application devices are rinsed with the cleaning solution for a duration in the range from 1 second to 24 hours, more specifically lacquer application devices preferably for a duration in the range from 1 second to 5 seconds, lacquer conduits preferably for a duration in the range from 10 minutes to 24 hours.

11. The method according to any or several of claims 8 to 10, **characterized in that** the cleaning solution is added to the circulating water of the lacquering installation after rinsing the lacquer conduits and/or the lacquer application devices.

## Revendications

1. Solution de nettoyage contenant de l'eau et
a) des alkyl- et/ou hydroxyalkylamines miscibles à l'eau, comprenant de un à trois groupes alkyle ou hydroxyalkyle dans la molécule, en une quantité telle que la valeur de pH de la solution de nettoyage se situe dans la plage de 9 à 13 ;
b) à concurrence de 0,01 à 2 % en poids, des éthoxylates d'alcools alkyliques ou d'alkylamines contenant de 8 à 22 atomes de carbone dans le radical alkyle et en moyenne de 8 à 15 unités d'oxyde d'éthylène dans la molécule, dont le groupe OH terminal peut être libre ou éthérifié avec un alcool contenant de 1 à 4 atomes de carbone ;
c) à concurrence de 0,01 à 2 % en poids, des éthoxylates d'alcools alkyliques ou d'alkylamines contenant de 8 à 22 atomes de carbone dans le radical alkyle et en moyenne de 0,5 à 5 unités d'oxyde d'éthylène dans la molécule, dont le groupe OH terminal peut être libre ou éthérifié avec un alcool contenant de 1 à 4 atomes de carbone.

2. Solution de nettoyage contenant de l'eau et
a) des alkyl- et/ou hydroxyalkylamines miscibles à l'eau, comprenant de un à trois groupes alkyle ou hydroxyalkyle dans la molécule, en une quantité telle que la valeur de pH de la solution de nettoyage se situe dans la plage de 10 à 13 ;
b) à concurrence de 0,01 à 2 % en poids, des éthoxylates d'alcools alkyliques ou d'alkylamines contenant de 8 à 22 atomes de carbone dans le radical alkyle et en moyenne de 8 à 15 unités d'oxyde d'éthylène dans la molécule, dont le groupe OH terminal peut être libre ou éthérifié avec un alcool contenant de 1 à 4 atomes de carbone ;
c) à concurrence de 0,01 à 2 % en poids, des éthoxylates d'alcools alkyliques ou d'alkylamines contenant de 8 à 22 atomes de carbone dans le radical alkyle et en moyenne de 0,5 à 5 unités d'oxyde d'éthylène dans la molécule, dont le groupe OH terminal peut être libre ou éthérifié avec un alcool contenant de 1 à 4 atomes de carbone.

3. Solution de nettoyage selon l'une quelconque des revendications 1 et 2 ou selon les deux, **caractérisée en ce qu'**elle contient, à titre de composants supplémentaires, des biocides, des inhibiteurs de la corrosion et/ou des polymères organiques.

4. Solution de nettoyage selon une ou plusieurs des revendications 1 à 3, **caractérisée en ce qu'**elle contient des agents tensioactifs anioniques en une quantité qui n'est pas supérieure à 0,04 % en poids.

5. Solution de nettoyage selon une ou plusieurs des revendications 1 à 4, **caractérisée en ce qu'**elle contient des éthoxylates d'alkylphénols en une quantité qui n'est pas supérieure à 0,04 % en poids.

6. Solution de nettoyage selon une ou plusieurs des revendications 1 à 5, **caractérisée en ce qu'**elle contient un ou plusieurs composés qui représentent des corps solides à une température de 20 °C et sous pression normale, en une quantité qui n'est pas supérieure à 0,04 % en poids.

7. Concentrat aqueux pour une solution de nettoyage, qui fournit, lors d'une dilution avec de l'eau, à concurrence d'un facteur dans la plage de 10 à 200, une solution de nettoyage selon une ou plusieurs des revendications 1 à 6.

8. Procédé pour le nettoyage de conduite de peinture et/ou d'appareils d'application de peinture dans une installation de peinture, dans lequel on nettoie les conduites de peinture et/ou les appareils d'application de peinture avec une solution de nettoyage selon une ou plusieurs des revendications 1 à 6.

9. Procédé selon la revendication 8, **caractérisé en ce que** la solution de nettoyage présente une température dans la plage de 10 à 35 °C, de préférence de 15 à 30 °C.

10. Procédé selon l'une quelconque des revendications 8 et 9 ou selon les deux, **caractérisé en ce qu'**on nettoie les conduites de peinture et/ou les appareils d'application de peinture avec la solution de nettoyage pendant un laps de temps dans la plage de 1 seconde à 24 heures, plus précisément, les appareils d'application de peinture de préférence pendant un laps de temps dans la plage de 1 seconde à 5 secondes et les conduites de peinture de préférence pendant un laps de temps dans la plage de 10 minutes à 24 heures.

11. Procédé selon une ou plusieurs des revendications 8 à 10, **caractérisé en ce qu'**on ajoute la solution de nettoyage, après le nettoyage des conduites de peinture et/ou des appareils d'application de peinture à l'eau en circulation dans l'installation de peinture.
